# EUROPEAN PATENT SPECIFICATION

(11) **EP 1 054 317 B1**
(45) Date of publication and mention of the grant of the patent: **28.05.2003**
(21) Application number: 00203125.0
(22) Date of filing: 04.11.1994
(51) Int. Cl.: G06K 7/10, G06K 7/06, G06K 13/08, G06K 17/00

(54) **A device for use with a portable terminal unit in an information processing system**
Vorrichtung für einen tragbaren Terminal in einen Datenverarbeitungssystem
Dispositif pour un terminal portable dans un système de traitement de données

(30) Priority: 09.11.1993 JP 30483693; 09.11.1993 JP 30483793; 09.11.1993 JP 30483593; 09.11.1993 JP 30484693; 09.11.1993 JP 30483493
(43) Date of publication of application: 22.11.2000
(62) Divisional of application: 94402489.2
(73) Proprietor: FUJITSU LIMITED, Kawasaki-shi, Kanagawa 211-8588 (JP)
(72) Inventor: Obato, Takao, Inagi-shi, Tokyo 206 (JP); Kumagai, Mitsuaki, Inagi-shi, Tokyo 206 (JP); Sato, Makoto, Inagi-shi, Tokyo 206 (JP); Okawado, Akira, Inagi-shi, Tokyo 206 (JP); Iura, Akihiko, Kawasaki-shi, Kanagawa 211-8588 (JP); Murata, Akio, Kawasaki-shi, Kanagawa 211-8588 (JP); Yamamoto, Shinji, Kawasaki-shi, Kanagawa 211-8588 (JP); Tsurumaru, Shinichiro, Kawasaki-shi, Kanagawa 211-8588 (JP); Miyata, Maki, Yokohama-shi, Kanagawa 226 (JP); Kobayashi, Toshiyuki, Inagi-shi, Tokyo 206 (JP); Akasawa, Nobuaki, Inagi-shi, Tokyo 206 (JP); Okano, Masahiko, Inagi-shi, Tokyo 206 (JP); Miyanaga, Takao, Inagi-shi, Tokyo 206 (JP)
(74) Representative: Joly, Jean-Jacques

(56) References cited:
- WO-A-90/09007
- US-A- 5 123 064

## Description

### BACKGROUND OF THE INVENTION

### 1. Field of the Invention

The present invention relates to an external device for extending a function of a portable terminal unit .

### 2. Description of the Related Art

In recent years, portable terminal units such as hand-held terminals (HHTs) are widely used for managing commodities, reading gas and electric meters, and the like.

Generally, a hand-held terminal has a keyboard to input data, a display such as a liquid crystal display, and a printer. Various data are entered into the hand-held terminal, and the entered data are displayed. Since the hand-held terminal Is hand-carried, it is designed to be compact and light. A hand-held terminal often employs a memory card such as an IC card as an external storage medium. The memory card stores data entered into the hand-held terminal. The memory card is usually installed in the hand-held terminal from an upper end or a lower end thereof by a memory card loading mechanism Installed therein.

However, the locations of the keyboard, the display, and the printer are more or less limited due to the method of use conditions thereof. Further, the hand-held terminal usually incorporates a battery, a modem for communicating data to a larger apparatus, and a connector for connecting the hand-held terminal to the larger apparatus whose position is generally fixed. Accordingly, the position for inserting the memory card is also limited and the width and thickness of the hand-held terminal may be increased by the installation of the memory card, thus having a negative effect on the compactness of the hand-held terminal.

In addition to designing a hand-held terminal that is compact and light, the hand-held terminal is required to have high-performance. Usually, the hand-held terminal is provided with an optical connector to communicate with a larger apparatus by using a transmission adaptor. That is, the data input into the hand-held terminal are transmitted to a larger apparatus by connecting the hand-held terminal to a transmission adaptor.

Conventionally, when the hand-held terminal communicates with the higher apparatus, an RS232C interface is used. Further, to reduce the size of the hand-held terminal, the prior art multiplexes RS232C interface signals and uses a pair of light emitting and receiving elements to send and receive data. If the hand-held terminal employs a large capacity memory, it must employ a high-speed interface to transmit data at high speed.

High-speed data transmission can be realized by employing a new interface and a connector dedicated to the interface. Installing these additional elements in addition to the conventional RS232C interface, however, is disadvantageous in terms of the compactness and light weight of the portable terminal unit.

Further, the conventional hand-held terminal is equipped with an electrical connector for connecting an external optional device. For example, a card reader for reading a magnetic card may be attached to the hand-held terminal as an optional device to add a function that is not originally present in the hand-held terminal. In this case, the external optional device is connected to the hand-held terminal with connectors and may be fixed thereto with at least one screw.

The connectors are fixed to the respective apparatuses or to printed circuit boards of the respective apparatuses. When connecting the apparatuses together, the connectors must be accurately positioned in relation to each other. This makes the connection work complicated.

In addition, connection of the external optional device makes the size of the hand-held terminal larger when the position of the connector on the hand-held terminal is not proper.

Incidentally, since the hand-held terminal can be used under various conditions, they should be sealed to prevent moisture or liquids from entering the terminal. The hand-held terminal may have a moisture resistant seal made of, for example, rubber. The seal is generally held between an upper casing and a lower casing of the hand-held terminal.

The lower part of the hand-held terminal may be provided with a connector to be connected to an external device and a jack for charging a battery incorporated in the hand-held terminal. The connector and jack may be provided with a moisture-and-dust-resistant cover made of rubber or resin. When transmitting data to an external device or when charging the battery, the covers are removed. Since the removed covers may be lost, to prevent this, there may be provided a notch on the casing and a T-shaped projection on the cover. The T-shaped projection of the cover can then be inserted into the notch of the casing, to fix the cover to the casing. The cover is sometimes extended therefrom to cover an interface connector.

However, the prior art that puts rubber between an upper casing and a lower casing provides poor workability and makes the size of the housing of the hand-held terminal larger. That is, the rubber must be made large enough to prevent the rubber from peeling off and moisture from penetrating. Further, if the T-shaped projection of the connector cover is loose in the notch, the projection may easily slip out of the notch of the casing, to cause the cover to be lost and provide poor moisture resistance.

Since the above-described hand-held terminals are usually carried around, they usually employ batteries, in particular, rechargeable batteries, as a power source.

The transmission adaptor is interposed between the hand-held terminal and the larger apparatus, to transmit data from the hand-held terminal to the larger apparatus, or from the larger apparatus to the hand-held terminal. The hand-held terminal and transmission adaptor may be connected to each other through optical connectors using on interface such as a RS232C interfaces.

When transmitting data to the larger apparatus, the hand-held terminal must be connected to a transmission adaptor. While the hand-held terminal is connected to the transmission adaptor to transmit data to the larger apparatus, the transmission adaptor charges the battery of the hand-held terminal. In this case, the hand-held terminal is provided with a battery charging jack and the transmission adaptor has a battery charging terminal. When the hand-held terminal is connected to the transmission adaptor, the jack is connected to the terminal to start charging the battery of the hand-held terminal. Power for this charging operation is supplied by a power source circuit in the transmission adaptor.

However, the transmission adaptor must charge the hand-held terminal, and at the same time, carry out data transmission between the hand-held terminal and the larger apparatus. The charging operation requires a relatively large amount of power, so that the power source of the transmission adaptor must have a large capacity. This results in enlarging the power source of the transmission adaptor.

It is always required to minimize the hand-held terminal and transmission adaptor. If the power source of the transmission adaptor is large, the size of the transmission adaptor cannot be minimized. Also, when the transmission adaptor simultaneously carries out the charging and data transmission operations, the transmission adaptor consumes a large amount of power, thereby making the power source circuit of the transmission adaptor large.

Document WO90/09007 discloses a data acquisition laser scanner system which includes a laser scanner module and a data acquisition terminal. The data acquisition terminal comprises a housing, manual input means to input data therein, display means, and means for storing electrical signals. The module comprises a housing having a window, a source of laser light, a mechanism for sweeping the laser beam within the housing to produce a scan pattern comprising at least one line, a reflective beam folding system for projecting the pattern out of the window and onto an object, such as a bar code, and a system for receiving light reflected off the object to convert the reflected light into electrical output signals indicative thereof. The module also includes a connector for releasable securement to a mating connector forming a portion of the data acquisition terminal for mounting the module thereon and carrying the electrical output signals thereto.

### SUMMARY OF THE INVENTION

The object of the present invention is to render the connecting process easier.

In order to accomplish the above-mentioned object, the invention concerns an external device as in claim 1.

A portable terminal unit can be further equipped with such an external device for extending the function of the portable terminal unit, to which it can be connected by the auxiliary connector. Auxiliary connectors are provided on the portable terminal unit and the optional external device comprises an opening around an auxiliary connector provided in the casing. A printed circuit board is positioned in the opening on which the actual connector itself is mounted, a bias means is provided in the opening for biasing the printed circuit board from the bottom side to an open air side of the opening, and a stopper means is provided in the opening for holding and controlling the position of the printed circuit board inside the opening.

### BRIEF DESCRIPTION OF THE DRAWINGS

The present invention will be more clearly understood from the description as set forth below with reference to the accompanying drawings, wherein:
Fig. 1 is a diagram illustrating the appearance of a conventional hand-held terminal and a memory card to be inserted therein;
Fig. 2 is a block diagram illustrating an internal constitution of a conventional hand-held terminal and a transmission adaptor;
Fig. 3A is a diagram illustrating a plan view and a bottom view of a conventional hand-held terminal and an external optional device;
Fig. 3B is a enlarged sectional view of a connector according to a prior art;
Fig. 4A is a cross-sectional view showing an upper casing, lower casing and a rubber seal according to a prior art;
Fig. 4B is explanatory view showing a connection of lower casing and a connector cover according to a prior art;
Fig. 5 is a block diagram illustrating an internal constitution of a conventional transmission adaptor;
Fig. 6 is a diagram illustrating a front view of a hand-held terminal;
Fig. 7 is a diagram illustrating a bottom view of a hand-held terminal;
Fig. 8 is a diagram illustrating a front view of a transmission adaptor;
Fig. 9 is a diagram illustrating a connection between the hand-held terminal and an external optional device according to the present invention;
Fig. 10 is a diagram illustrating a perspective view of the external optional device according to the present invention attached to the hand-held terminal;
Fig. 11 is a sectional side view showing an external optional device according to the present invention;
Fig. 12 is a diagram illustrating a connection between the external optional device according to the present invention and the hand-held temninal.

### DESCRIPTION OF THE PREFERRED EMBODIMENTS

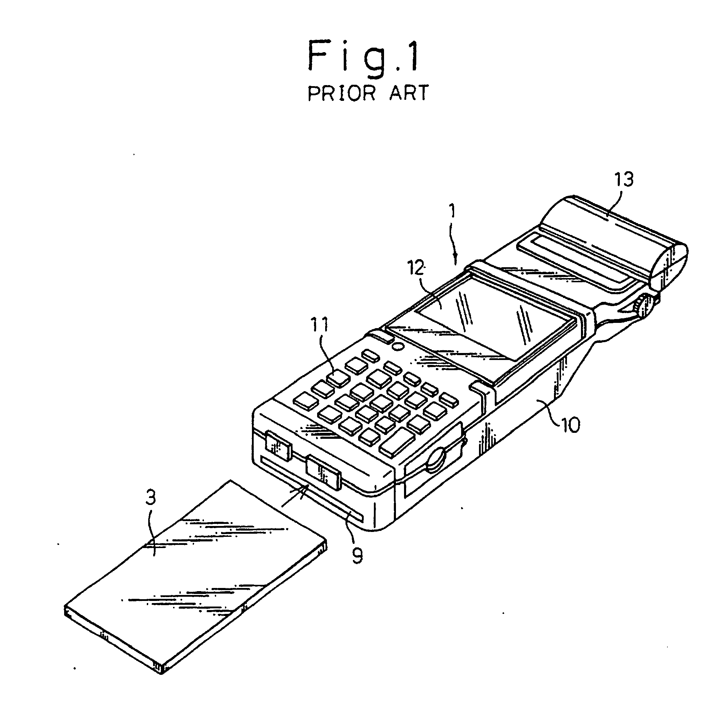

Before describing the preferred embodiments, an explanation will be given of a conventional information processing system using a portable terminal unit and a data communication adaptor therefor as shown in Figs. 1 to 5.

Figure 1 illustrates the appearance of a hand-held terminal 1 as a portable terminal unit according to a prior art. The hand-held terminal 1 has a slot 9 for inserting a memory card 3, a keyboard 11 serving as an input device, a liquid crystal display 12 serving as a display unit, a printer 13, and some connectors. The liquid crystal display 12 has a touch panel for entering data.

Various data are entered into the hand-held terminal 1, and the entered data are displayed. Since the hand-held terminal 1 is hand-carried, it is designed to be compact and light.

The hand-held terminal 1 employs a memory card 3 such as an IC card as a removable storage medium. The memory card 3 stores data entered into the hand-held terminal 1.

The memory card 3 is usually installed in the hand-held terminal 1 from an upper end or a lower end thereof. In Fig. 1, the memory card 3 is installed in the hand-held terminal 1-through the slot 9.

The hand-held terminal 1 has the keyboard 11 serving as an input device, and the display 12. The locations of these units are more or less limited due to the use thereof. Namely, the keyboard 11 and display 12 occupy substantially all of the front face of the hand-held terminal 1. The back of the hand-held terminal 1 which is not shown is provided with an optical connector. These components will be explained later.

The hand-held terminal 1 incorporates a battery serving as a power source for the hand-held terminal 1, a printer 13 for printing data, a modem for exchanging data with a larger apparatus (host computer), and a connector for connecting the hand-held terminal 1 to the host computer. As and when required, the input data is transmitted to the host computer by connecting the hand-held terminal 1 to a transmission adaptor which will be explained later.

Among these components, the battery is usually located at the lower part of the hand-held terminal 1 and the printer 13 at the upper part thereof due to the issues of weight balance and convenience in use. For compactness, the width and thickness of the hand-held terminal 1 must be minimized. The sizes of the battery and printer 13, however, are usually fixed. Accordingly, the upper and lower parts of the hand-held terminal 1 have virtually no free space due to the battery, etc.

The connector for communicating with the host computer is usually arranged at the lower part of the hand-held terminal 1 for convenience. Accordingly, it would be nearly impossible to enable loading the memory card 3 into the hand-held terminal 1 from the upper or lower end thereof if the size of the hand-held terminal is very small. To load the memory card 3 into the hand-held terminal 1 from the upper or lower end thereof, the hand-held terminal must be thicker as shown in Fig. 1.

One possibility is to load the memory card 3 into the hand-held terminal 1 from one side thereof. However, since the length of the memory card 3 is limited according to standards, the hand-held terminal 1 would have to wide enough to enclose the length of the memory card 3 if the memory card 3 is inserted entirely into the hand-held terminal 1 from the side thereof. The increased width of the hand-held terminal 1 spoils the compactness thereof.

The hand-held terminal 1 may be widened at only a portion where the memory card 3 is inserted, however, this makes the hand-held terminal 1 partly bulky, not handy to use, limits the freedom of design and makes the unit poor in appearance.

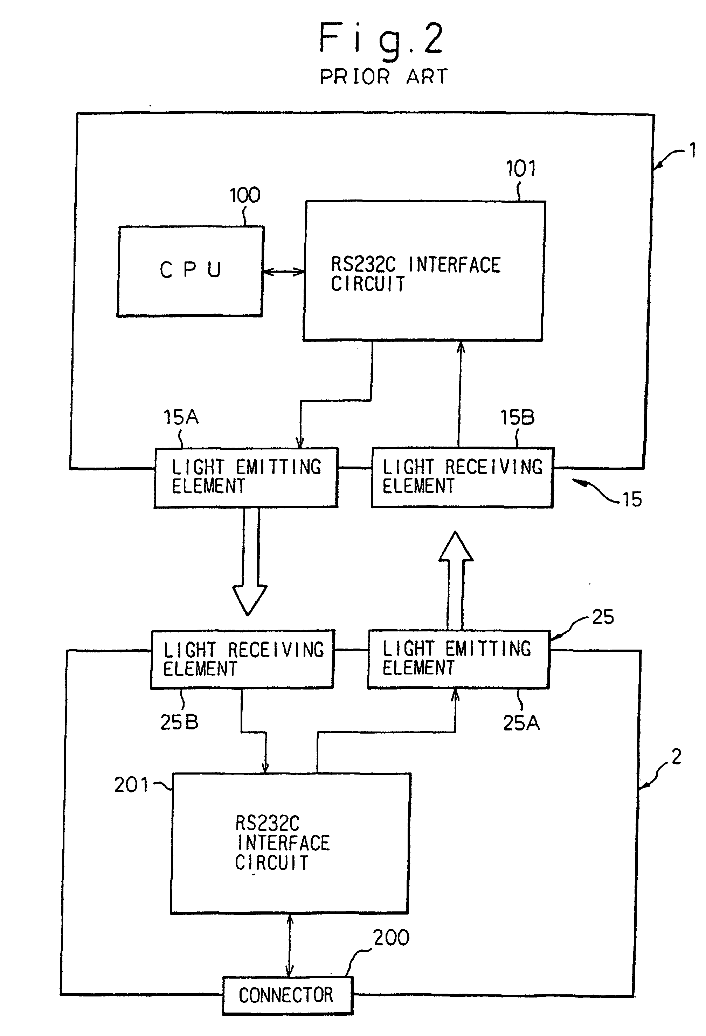

Figure 2 shows the inside of a hand-held terminal 1 and a transmission adaptor 2 according to a prior art. The hand-held terminal 1 and the transmission adaptor 2 have optical connectors 15 and 25 respectively, which send and receive data to and from each other. The optical connector 15 is comprised of a light emitting element 15A for transmitting data, and a light receiving element 15B for receiving data. The optical connector 25 is comprised of a light emitting element 25A and a light receiving element 25B.

The optical connectors 15 and 25 are non-contact connectors, which are stable even if the hand-held terminal 1 is repeatedly attached to and detached from the transmission adaptor 2. To transmit data to a larger apparatus (host computer), the hand-held terminal 1 is set on the transmission adaptor 2.

These apparatuses have, for example, RS232C interface circuits 101 and 201, and CPU 100 for totally controlling the hand-held terminal 1. To reduce the size of the hand-held terminal 1, the prior art multiplexes RS232C interface signals and uses a pair of light emitting and receiving elements 15A and 25B, and 25A and 15B.

However, if-the hand-held terminal 1 employs a large capacity memory, it must employ a high-speed interface to transmit data at high speed.

High-speed data transmission can be realized by employing a new interface and a dedicated connector for the interface. Installing these additional elements in addition to the conventional RS232C interface circuit, however, is disadvantageous in terms of compactness and light weight of the portable terminal unit.

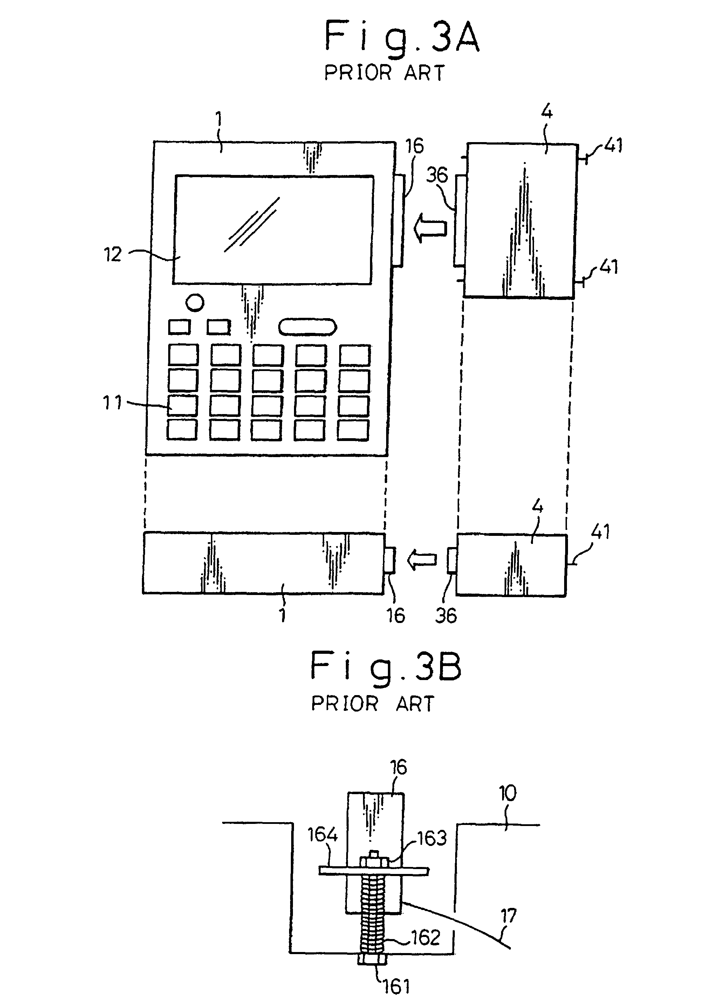

In order to add an optional function, an external optional device 3 can be attached to a portable terminal unit as shown in Fig. 3A. For example, a card reader for reading a magnetic cards may be attached to the hand-held terminal 1 to add a function that is not originally present in the hand-held terminal 1.

Figure 3A shows connection between the hand-held terminal 1 having the keyboard 11 and the display unit 12, and an external optional device 4. The external optional device 4 is connected to the hand-held terminal 1 by connectors 36 and 16 and fixed together with at least one screw 41.

The connectors 16 and 36 are fixed to the respective apparatuses or to printed boards of the respective apparatuses. When connecting the apparatuses together, the connectors must be accurately positioned in relation to each other. This makes the connection work complicated.

The position of the connectors 16 and 36 on the hand-held terminal 1 and the transmission adaptor 4 may fluctuate due to manufacturing errors. in the positions of the connectors 16 and 36 to be connected together deviate too much, it will be very difficult to connect them together. If the deviation is very large, it will be impossible to connect them to each other.

To solve this problem, connectors 16 and 36 must be accurately positioned in the manufacturing process. Such an accurate arrangement of the connectors 16 and 36 takes a great deal of labor and time. If the positions of connectors 16 and 36 deviate too much, the connectors 16 and 36 will be subject to excessive force when the hand-held terminal 1 and the transmission adaptor 4 are fixed together with screws. This will apply stress to the fitting portions of the connectors.

To cope with this situation, one of the connectors 16 and 36 may be mounted flexibly on the casing. Figure 3B shows a connector 16 fitting structure that has a certain degree of freedom in the position of a connector. This example does not fix the connector 16 to the casing 10 proper.

Threaded bolts 161 are first fixed to the casing 10. A spring 162 is arranged around each of the bolts 161. A connector 16 is set on the springs 162, and a nut 163 is set on each of the bolts 161. The springs 162 push the connector 16 upward. The connector 16 is slightly movable in a vertical direction. The diameter of the bolt 161 may be slightly smaller than that of a hole formed on a flange 164 of the connector 16 so that the connector 16 is slightly horizontally movable. Numeral 17 is a cable for connecting the connector 16 to a printed circuit board (not shown) in the hand-held terminal 1.

According to this mechanism, at least one of the connectors to be connected together is movable relative to the other, so that the accuracy in aligning the connectors need not be so accurate, and the joined connectors will not be subject to excessive stress.

Compared with fixed connectors, the movable connectors easily join corresponding apparatuses together, thereby improving workability.

This mechanism, however, additionally requires the processes of fitting bolts 161 and inserting springs 162, which increases labor and time required in manufacturing.

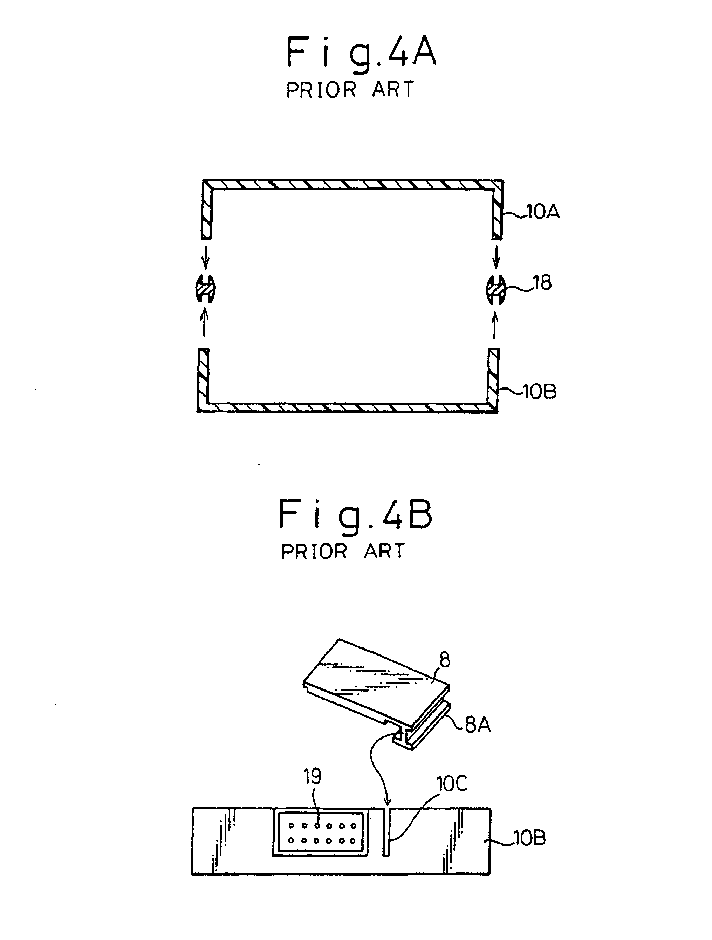

Usually, the hand-held terminal 1 has a moisture resistant seal 18 as shown in Fig. 4A made from, for example, rubber. The moisture resistant seal 18 is held between an upper casing 10A and a lower casing 10B of the hand-held terminal 1.

The lower part of the hand-held terminal 1 is provided with connectors to be connected to an external a device and for charging a battery incorporated in the hand-held terminal 1. The connectors are provided with a moisture-and-dust-resistant cover made from rubber or resin. When transmitting data to an external device or when charging the battery, the covers are removed. However, the removed covers may be lost, or the covers on the connector, etc., may unexpectedly fall off. To prevent this, a prior art of Fig. 4B cuts a slot 10C in the lower casing 10B and a tab 8A on a cover 8. The tab 8A of the cover 8 is inserted into the slot 10C of the casing 10B, to fix the cover 8 to the casing 10B. The cover 8 covers the connector 19 when the connector 19 is not used.

The hand-held terminal 1 is usually provided with a buzzer for informing a user of the completion of data input. The buzzer must provide a predetermined volume of sound. For this purpose, the casing of the hand-held terminal 1 has an opening for the buzzer.

The prior art that uses rubber moisture resistant seal 18 between the upper casing 10A and the lower casing 10B provides poor workability. The moisture resistant seal 18 and casings 10A and 10B may form a gap that enables the rubber to peel off and moisture to enter the casing 10.

The connector cover 8 having the tab 8A may easily come off out of the slot 10C of the casing 10 and become lost making the casing 10 susceptible to moisture.

The buzzer opening is disadvantageous because it allows moisture to enter. To provide moisture resistance, there can be no buzzer opening. However, this results in insufficient sound volume because a buzzer installed in the hand-held terminal produces a small volume of sound.

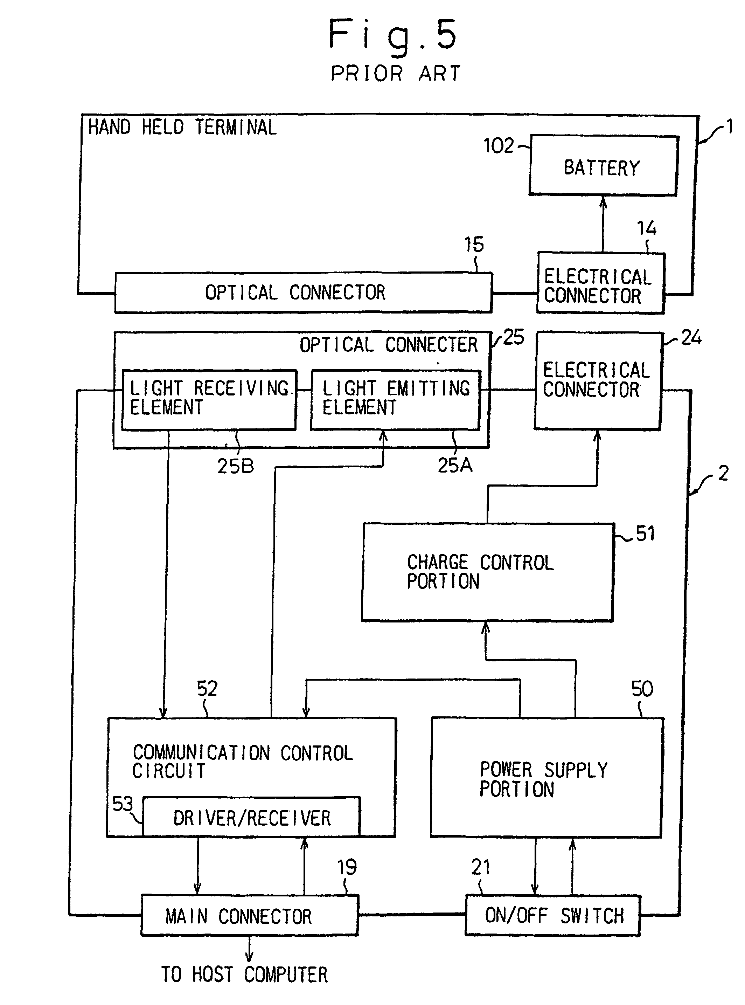

Figure 5 shows the transmission adaptor 2 and the hand-held terminal 1 according to a prior art. Numeral 102 is a battery provided in the hand-held terminal 1, for supplying power thereto. Numeral 50 is a power supply portion (power source) provided in the transmission adaptor 2. The power supply portion 50 supplies power to the transmission adaptor 1 and charges the battery 102 when ON/OFF switch 21 is ON. The ON/OFF switch is turned ON when the hand-held terminal 1 is connected to the transmission adaptor 2. Numeral 51 is a charge control portion for controlling the charging operation of the battery 102.

Numeral 52 is a communication control circuit for controlling communication between the hand-held terminal 1 and the host computer (not shown).

The transmission adaptor 2 is interposed between the hand-held terminal 1 and the host computer, to transmit data from the hand-held terminal 1 to the host computer, or from the host computer to the hand-held terminal 1. The hand-held terminal 1 and transmission adaptor 2 are connected to each other through the optical connectors 15 and 25 with the use of a interface such as an RS232C interface.

After the hand-held terminal 1 stores a given quantity of data, it must transmit the data to the host computer. The communication control circuit 52 controls data communication between the hand-held terminal 1 and the host computer. If the hand-held terminal 1 frequently transmits data to the host computer, the hand-held terminal is frequently connected to and removed from the transmission adaptor. In this case, the optical connectors 15.and 25 are advantageous because they are contactless connectors.

When transmitting data to the host computer, the hand-held terminal 1 must be connected to the transmission adaptor 2. While the hand-held terminal 1 is connected to the transmission adaptor 2 to transmit data to the host computer, the transmission adaptor 2 charges the battery 102 of the hand-held terminal 1. The lower part of the hand-held terminal 1 is provided with an electrical connector 14 for charging battery, in addition to the optical connector 15. The transmission adaptor 2 has an electrical connector 24 for charging the battery. When the hand-held terminal 1 is connected to the transmission adaptor 2, the electrical connectors 14 and 24 are connected together to start charging the battery 102 of the hand-held terminal 1. Power for this charging operation is supplied by the power supply portion 50.

The transmission adaptor 2 must charge the hand-held terminal 1, and at the same time, carry out data transmission between the hand-held terminal 1 and the host computer. The charging operation requires a relatively large amount of power, so that the power supply portion 50 of the transmission adaptor 2 must have a large capacity. This results in enlarging the power supply portion 50 of the transmission adaptor 2.

Although it is generally required to minimize the size of the hand-held terminal 1 and transmission adaptor 2, if the power supply portion 50 of the transmission adaptor 2 is large, the size of the transmission adaptor 2 cannot be reduced.

When the transmission adaptor 2 simultaneously carries out the charging and data transmission operations, the transmission adaptor 2 consumes large power, and the size of the power source circuit become large.

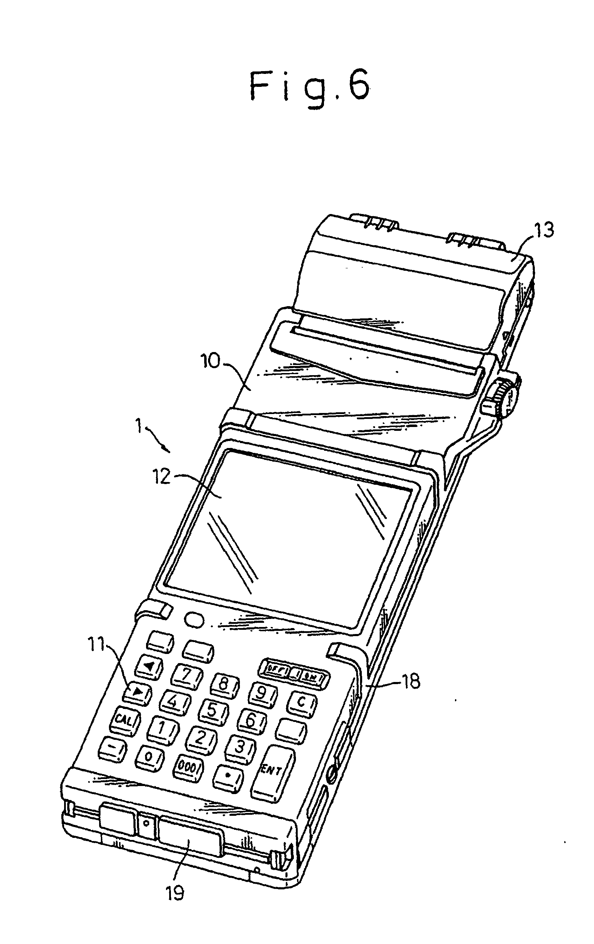

Figure 6 is a perspective view illustrating a front face of a hand-held terminal 1. In Fig. 6, numeral 10 denotes a casing of the hand-held terminal 1, 11 denotes a keyboard, 12 denotes a display unit comprised of a liquid crystal display, 13 denotes a printer, 18 denotes a moisture resistant seal, and 19 denotes a main connector for communicating with the host computer. The main connector is covered by an extended part of the moisture resistant seal 18.

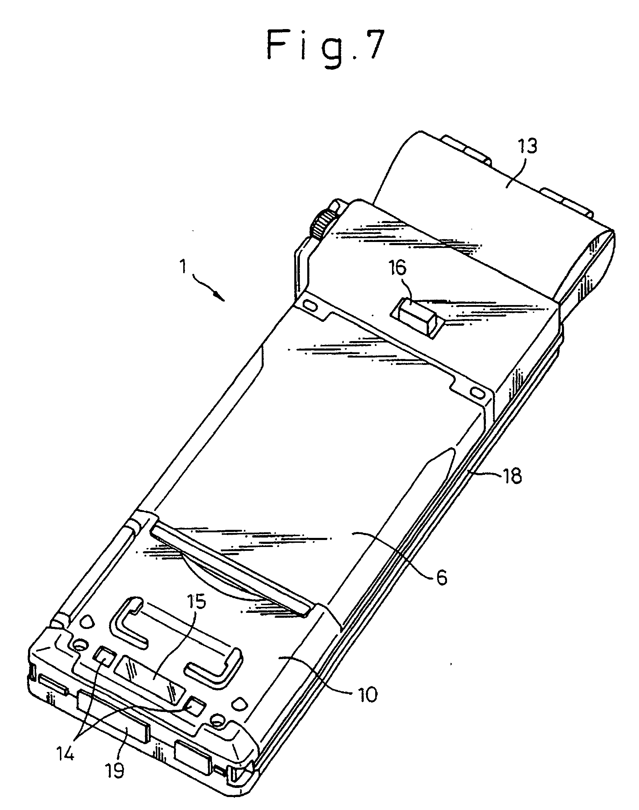

Figure 7 is a perspective view illustrating a bottom face of a hand-held terminal 1. In Fig. 7, numeral 6 denotes a lid, 10 denotes a casing of the hand-held terminal 1, 13 denotes a printer, 14 denotes electrical connector for providing power to the hand-held terminal 1 to operate the hand-held terminal or charge a battery, 15 denotes an optical connector for transmitting data, 16 denotes an auxiliary connector for connecting an external optional device, 18 denotes a moisture resistant seal, and 19 denotes a main connector for communicating with the host computer. The main connector is covered by an extended part of the moisture resistant seal 18.

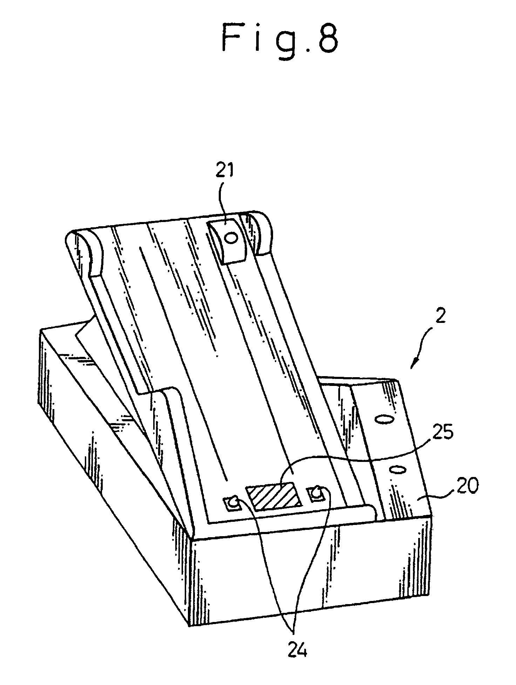

Figure 8 is a perspective view illustrating a front face of a transmission adaptor 2. In Fig. 8, numeral 20 denotes a casing of the transmission adaptor 2, 21 denotes an ON/OFF switch, 24 denotes electrical connectors for supplying power to the hand-held terminal 1 to operate the hand-held terminal or charge a battery, and 25 denotes an optical connector for transmitting data. The ON/OFF switch 21 is turned ON when the hand-held terminal 1 is placed on the transmission adaptor 2.

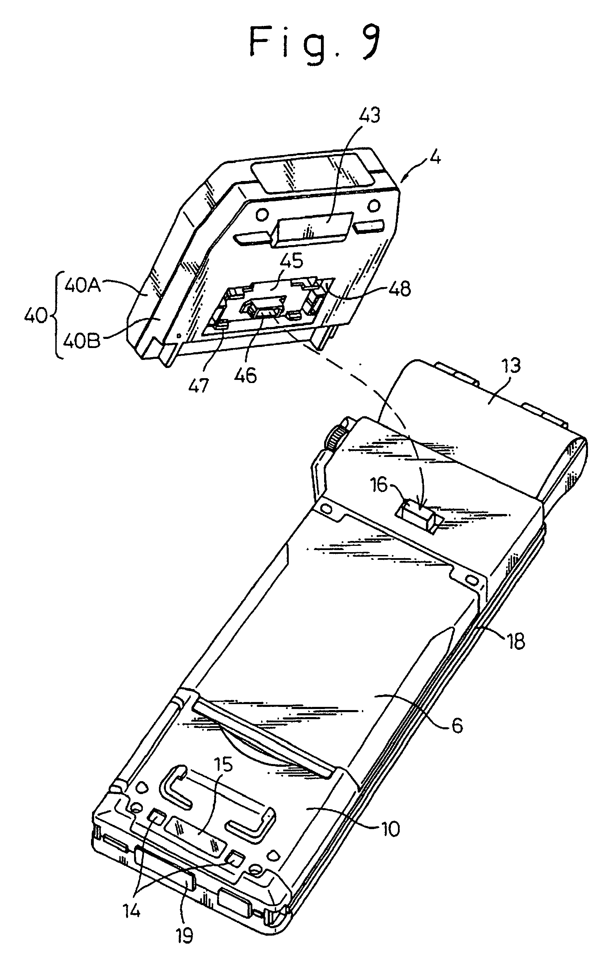

Figure 9 is a diagram illustrating a connection between the hand-held terminal 1 and an external optional device according to the present invention.

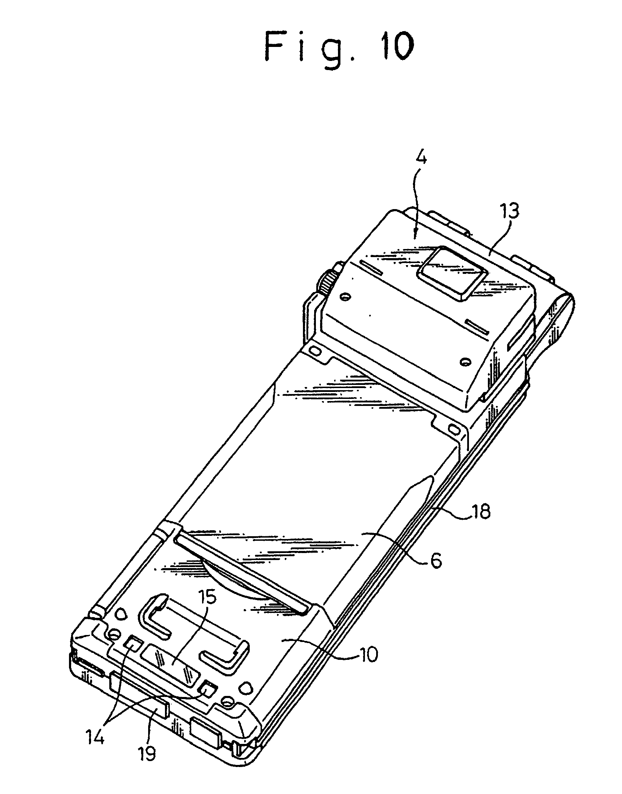

The external optional device 4 may be a magnetic card reader or a bar-code reader. The external optional device 4 of Fig. 10 is attached to the hand-held terminal 1. The external optional device 4 provides the hand-held terminal 1 with an additional function that is not originally provided.

As explained in Fig. 7, the hand-held terminal 1 has the lid 6, the casing 10, the printer 13, the electrical connectors 14 for receiving power, the optical connector 15 for transmitting data, the auxiliary connector 16 for connecting an external optional device 4, the moisture resistant seal 18, and the main connector 19 for communicating with the host computer covered with a extended part of the moisture resistant seal 18.

In Fig. 9, the external optional device 4 is shown from the back. Numerals 40 denotes a casing comprised of an upper casing 40A and a lower casing 40B, 43 denotes a projection, 45 denotes a printed circuit board, 46 denotes a connector mounted on the printed circuit board 45, 47 denotes a claw, and 48 denotes an opening. The external optional device is attached on the back of the hand-held terminal 1 with its connector 46 engaged with the auxiliary connector 16 of the hand-held terminal 1 as shown in Fig. 10.

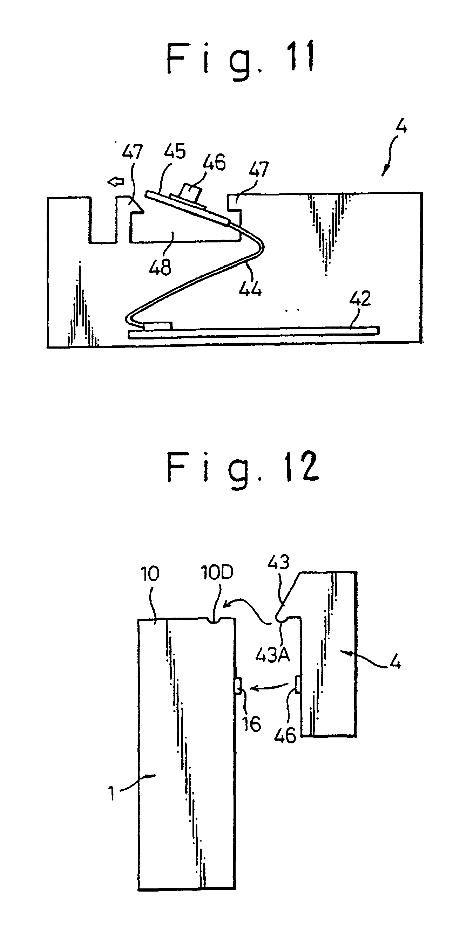

Figure 11 is a sectional side view showing an internal construction of the external optional device 4. The printed circuit board 45 where the connector 46 is mounted is attached to an end of a flexible cable 44. The other end of the flexible cable 46 is connected to a main printed circuit board 42. The flexible cable 44 may be a flat cable. The flexible cable 46 is folded at two locations between the printed circuit board 45 and the main printed circuit board 42. The number of the folds is not limited to two.

The folded cable 46 pushes the printed circuit board 45 on which the connector 46 is attached upward with the elasticity of the cable. Accordingly, this embodiment uses no springs to push the connector 46. To strengthen the elasticity of the cable 46, the angle of bending at each fold of the cable 46 may be steepened. The connector 46 is accessible through the opening 48. Four claws 47 are formed along the opening 48 to suppress the four corners of the printed circuit board 45 to keep the printed circuit board 45 inside of the opening 48.

There is a space between the claws 47 and the bottom of the opening 48, to allow the connector 46 to move vertically. The horizontal and vertical size of the opening 48 is slightly larger than that of the size of the printed circuit board 45 on which the connector 46 is attached. Accordingly, the printed circuit board 45, namely, the connector 46 is slightly movable in left and right directions or up and down directions in the opening 48.

The claws 47 positioned in the upper portion of the hand-held terminal 1 (left side in Fig. 11) have a tapered outside face. Accordingly, when the printed circuit board 45 is inserted into the opening 48, an end of the printed circuit board 45 is set under the claws 47 positioned in the lower portion of the hand-held terminal 1 (right side in Fig. 11) first. Then the other end of the printed circuit board 45 is pushed towards the tapered face of the upper claws 47. The other end of the printed circuit board 45 slides on the tapered face while bending the claws 47 outside and then the printed circuit board 45 is easily set under the claws 47.

Figure 12 explains how the external optional device 4 is attached on the hand-held terminal 1. A claw 43A is formed on the free end of the projection 43 in this embodiment, and a recess 10D is formed on the top face of the casing 10 of the hand-held terminal 1. When the external device 4 is mounted on the hand-held terminal 1, the claw 43A of the projection 43 engages with the recess 10D first. This engagement roughly positions the external optional device 4 relative to the hand-held terminal 1. The external device 4 is moved with the claw 43A of the projection 43 and recess 10D serving as fulcrum, and the connector 16 of the hand-held terminal 1 is engaged with the connector 46 of the external device 4. The hand-held terminal 1 and the external optional device 4 are fixed to each other with screws (not shown).

The connector 46 is movable so that it moves depending on the position of the connector 16 of the hand-held terminal 1 when the connectors 16 and 46 are engaged with each other. Accordingly, a user can easily join the connectors 16 and 46 without paying attention to the positions of the connectors.

Even after the hand-held terminal 1 and external optional device 4 are fixed to each other with the screws, the connector 46 of the external device 4 is movable relative to the screws, so that no excessive load is applied to the connectors 16 and 46 even if the positions of the connector 16 of the hand-held terminal 1 and the connector 46 of the external device 4 deviate from each other.

In this way, this embodiment reduces labor and time in joining connectors together. Further, the structure of each connector 16 and 46 is simple, thereby reducing manufacturing processes, and causing no trouble even if the fitting position of a connector fluctuates in the manufacturing process.

## Claims

1. An external device (4) for extending a function of a portable terminal unit (1) to which said external device can be optionally connected by an auxiliary connector (46), said external device comprising:
an opening (48) around the auxiliary connector (46), said opening being provided in a casing (40 B) of said external device,
**characterized in that** said device further comprises
a printed circuit board (45) positioned in the opening (48), said auxiliary connector (46) being mounted on said printed circuit board,
a bias means (44) for pushing said printed circuit board (45) from the bottom side of the casing to an open-air side of the opening (48),
and a stopper means (47) provided in the opening (48) for retaining and regulating the position of the printed circuit board (45) inside the opening (48).

2. A device as in claim 1, wherein said bias means further comprises a flexible cable (44) to an end of which said auxiliary connector is mounted.

3. A device as set forth in claim 1 or 2, further comprising a main printed circuit board (42) and wherein said flexible cable connects said main printed circuit board (42) and the printed circuit board (45) on which the auxiliary connector (46) is mounted.

4. A device as set forth in any of claims 1 to 3, further comprising;
a projected portion (43) on one end of the device and wherein said device (4) can be connected to the portable terminal unit (1) through the auxiliary connector (46) by rotating the device (4) with the projected portion (43) inserted in a recess (10D) of said portable terminal unit (1) said recess (10D) corresponding to the projected portion (43),

5. A device as in any of claims 1-4, wherein said stopper means (47) comprise claws.

## Patentansprüche

1. Externe Vorrichtung zur Erstrecken einer Funktion von einer tragbaren Terminaleinheit (1), mit welcher die externe Vorrichtung wahlweise durch einen Hilfsverbinder (46) verbunden werden kann, welche externe Vorrichtung umfaßt:
eine Öffnung (48) um den Hilfsverbinder (46), welche Öffnung in einem Gehäuse (40B) der externen Vorrichtung vorgesehen ist,
**dadurch gekennzeichnet, daß** die Vorrichtung ferner umfaßt
eine gedruckte Schaltungskarte (45), die in der Öffnung (48) positioniert ist, wobei der Hilfsverbinder (46) auf der gedruckten Schaltungskarte montiert ist,.
ein Vorspannungsmittel (44) zum Schieben der gedruckten Schaltungskarte (45) von der Bodenseite des Gehäuses zur der offenen (open-air) Seite des Gehäuses (48),
und ein Anschlagmittel (47), das in der Öffnung (48) vorgesehen ist, um die Position der gedruckten Schaltungskarte (45) innerhalb der Öffnung (48) zurückzuhalten und zu regulieren.

2. Vorrichtung nach Anspruch 1, worin das Vorspannungsmittel ferner ein flexibles Kabel (44) umfaßt, an dessen einem Ende der Hilfsverbinder montiert ist.

3. Vorrichtung auch Anspruch 1 oder 2, ferner mit einer gedruckten Hauptschaltungskarte (42) und worin das flexible Kabel die gedruckte Hauptschaltungskarte (42) und die gedruckte Schaltungskarte (45), auf welcher der Hilfsverbinder (46) montiert ist, verbindet.

4. Vorrichtung nach einem der Ansprüche 1 bis 3, ferner mit:
einem vorstehenden Abschnitt (43) an einem Ende der Vorrichtung, und worin die Vorrichtung (4) über den Hilfsverbinder (46) durch Rotieren der Vorrichtung (4) mit dem vorstehenden Abschnitt (43) in eine Ausnehmung (10D) der tragbaren Terminaleinheit (1) eingeführt, welche Ausnehmung (10D) dem vorstehenden Abschnitt (43) entspricht, mit der tragbaren Terminaleinheit (1) verbunden werden kann.

5. Vorrichtung nach einem der Ansprüche 1 bis 4, worin das Anschlagmittel (47) Klauen umfassen.

## Revendications

1. Dispositif externe (4) pour étendre une fonction d'une unité de terminal portable (1) sur laquelle ledit dispositif externe peut en option être connecté au moyen d'un connecteur auxiliaire (46), ledit dispositif externe comprenant :
une ouverture (48) autour du connecteur auxiliaire (46), ladite ouverture étant ménagée dans un carter (40B) dudit dispositif externe,
**caractérisé en ce que** ledit dispositif comprend en outre :
une carte de circuit imprimé (45) qui est positionnée dans l'ouverture (48), ledit connecteur auxiliaire (46) étant monté sur ladite carte de circuit imprimé ;
un moyen de poussée (44) pour pousser ladite carte de circuit imprimé (45) depuis le côté inférieur ou de fond du carter jusqu'à un côté ouvert à l'air de l'ouverture (48) ; et
un moyen d'arrêt (47) qui est prévu dans l'ouverture (48) pour retenir et réguler la position de la carte de circuit imprimé (45) à l'intérieur de l'ouverture (48).

2. Dispositif selon la revendication 1, dans lequel ledit moyen de poussée comprend en outre un câble flexible (44) sur une extrémité duquel ledit connecteur auxiliaire est monté.

3. Dispositif selon la revendication 1 ou 2, comprenant en outre une carte de circuit imprimé principale (42) et dans lequel ledit câble flexible connecte ladite carte de circuit imprimé principale (42) et la carte de circuit imprimé (45) sur laquelle le connecteur auxiliaire (46) est monté.

4. Dispositif selon l'une quelconque des revendications 1 à 3, comprenant en outre :
une partie de protubérance (43) sur une extrémité du dispositif, et dans lequel ledit dispositif (4) peut être connecté à l'unité de terminal portable (1) par l'intermédiaire du connecteur auxiliaire (46) en faisant tourner le dispositif (4) tandis que la partie de protubérance (43) est insérée dans un évidemment (10D) de ladite unité de terminal portable (1), ledit évidemment (10D) correspondant à la partie de protubérance (43).

5. Dispositif selon l'une quelconque des revendications 1 à 4, dans lequel ledit moyen d'arrêt (47) comprend des mâchoires.
